# EUROPÄISCHE PATENTSCHRIFT

(11) **EP 1 848 102 B1**
(45) Veröffentlichungstag und Bekanntmachung des Hinweises auf die Patenterteilung: **02.02.2011**
(21) Anmeldenummer: 07102633.0
(22) Anmeldetag: 19.02.2007
(51) Int. Cl.: H02M 7/06, H02J 13/00

(54) **Antriebseinrichtung**
Drive device
Dispositif d'entraînement

(30) Priorität: 20.04.2006 DE 102006000190
(43) Veröffentlichungstag der Anmeldung: 24.10.2007
(73) Patentinhaber: Honeywell Technologies Sarl, 1110 Morges (CH)
(72) Erfinder: Behrens, Volker, 71088 Holzgerlingen (DE)
(74) Vertreter: TBK-Patent

(56) Entgegenhaltungen:
- DE-A1- 4 432 059
- DE-U1- 29 616 591
- JP-A- 63 181 694

## Beschreibung

Die Erfindung bezieht sich auf eine elektromotorische Antriebseinrichtung, die in der Gebäudetechnik Verwendung finden kann.

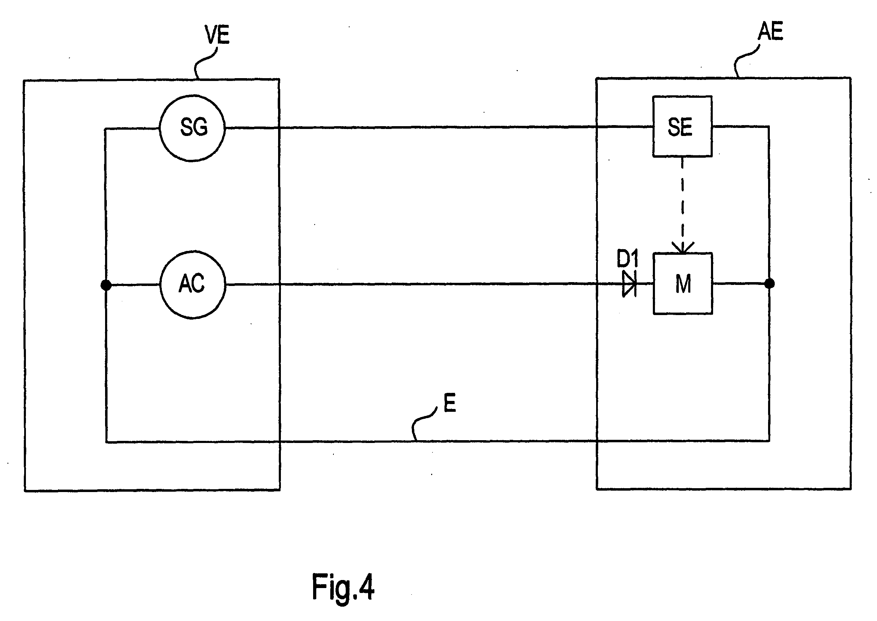

In der Figur 4 wird ein Antriebssystem mit einer Antriebseinrichtung AE und einer Versorgungseinrichtung VE gezeigt. Die Versorgungseinheit VE umfasst einen Steuersignalgeber SG und eine Wechselspannungsquelle AC. Sie ist über drei Leitungen mit der Antriebseinrichtung verbunden, von denen eine die gemeinsame Masse darstellt.

In der Antriebseinheit AE empfängt eine Steuereinrichtung SE das Steuersignal des Steuersignalgebers SG und wirkt dementsprechend auf einen Elektromotor M ein. Die Versorgungsspannung für die Antriebseinrichtung AE wird von der Wechselspannungsquelle AC über eine Diode D1 (EinwegGleichrichtung) und evtl. eine geeignete Spannungsregelung bereitgestellt. Sowohl der Motor M als auch die Steuereinrichtung SE erhalten ihre Betriebsspannung über die Diode D1.

Die Aufgaben der Versorgungseinrichtung VE kann beispielsweise eine zentrale Gebäudesteuerungseinrichtung übernehmen. Bei der Antriebseinrichtung AE handelt es sich beispielsweise um die Antriebseinrichtung einer Lüfterklappe.

Das bekannte Antriebssystem arbeitet einwandfrei. Jedoch wird durch die Einweggleichrichtung mittels der Diode D1 nur eine Hälfte des von der Wechselspannungsquelle AC bereitgestellten Wechselstromes genutzt. Die Wechselspannungsquelle wird im Allgemeinen durch einen Transformator gebildet, der nun wegen der asymmetrischen Belastung und dem sich daraus ergebenden Gleichstromanteil deutlich größer dimensioniert werden muss (typisch: vier mal größer), als für die vom Antriebssystem benötigte elektrische Leistung eigentlich notwendig wäre. Dadurch entstehen höhere Kosten. Z.B. ist ein 24V/150VA Transformator, wie er häufig in der Gebäudeautomatisation eingesetzt wird, mit 6A Wechselstrom belastbar. Bei Gleichstrombelastung sinkt der zulässige Wert auf nur noch 1,3A.

Ein bekanntes elektrisches Gerät ist beispielsweise in der Druckschrift JP 63181694 A gezeigt. In dieser Druckschrift wird eine Motorsteuerung für ein Heimmassagegerät offenbart, wobei eine Netzspannung über einen Triac und einen Brückengleichrichter einem Motor zugeführt wird. Bei dieser Phasenanschnittsteuerung wird ein Diac zum Anschnittsteuern des Triacs mittels variabler Zeitkonstantenschaltungen und der Motorgegenkraft über einen Widerstand gesteuert.

Der Erfindung liegt demgegenüber die Aufgabe zugrunde, ein verbessertes elektrisches Gerät, bzw. eine verbesserte Antriebseinrichtung vorzuschlagen.

Diese Aufgabe wird mit einem Gerät gemäß Patentanspruch 1 gelöst.

Die Figur 4 zeigt den firmeninternen Stand der Technik, der im Wesentlichen die Merkmale (a), (b), (c) und (d) umfasst.

Durch die Vorsehung eines Subtrahierers, der die Differenz zwischen dem Steuersignal und dem Potential der Masseleitung an die Steuereinrichtung abgibt, wird es ermöglicht, in der Antriebseinheit einen Vollwellengleichrichter, bzw. einen Brückengleichrichter zu verwenden. Anderenfalls würde das Steuersignal durch die von Diode D4 verursachten Unterschiede zwischen dem Massepotential E und dem Potential E2 rechts von Diode D4 stark verfälscht.

Der Subtrahierer besteht vorteilhafter Weise aus einem Operationsverstärker und vier Widerständen. Sind in der Antriebseinheit bereits sowieso schon Operationsverstärker enthalten, sind häufig von den vier Operationsverstärkern, die üblicherweise in einem Operationsverstärker-IC enthalten sind, gar nicht alle benutzt, so dass der Operationsverstärker für den Subtrahierer bereits kostenlos zur Verfügung steht. Da der Preis von Widerständen darüber hinaus außerordentlich gering ist, lässt sich die erfindungsgemäße Lösung mit sehr geringem materiellen Aufwand realisieren.

Bei der Antriebseinrichtung gemäß Figur 4 entstehen durch die Widerstände der Zuleitungen Ladestromimpulse, die das Steuersignal überlagern und somit verfälschen können. Diese lassen sich bei der Einweggleichrichterlösung wegen ihres Gleichspannungsanteils nicht vollständig durch einen Tiefpass eliminieren. Bei der Vollweggleichrichtung kann jedoch das nun symmetrische Störsignal durch einen Tiefpassfilter am Ausgang des Operationsverstärkers auf einfache Art und Weise wirkungsvoll eliminiert werden.

Bei besonders großen Leitungswiderständen können jedoch Störsignale auftreten, die so groß sind, dass der Arbeitsspannungsbereich des Subtrahierers überschritten wird. Dieser übersteuert dann und kann am Ausgang kein korrektes Signal mehr ausgeben. Solche Störungen können dann mit einer Tiefpassfilterung am Ausgang des Subtrahierers nicht mehr eliminiert werden können. Für Anwendungsfälle dieser Art kann alternativ oder zusätzlich ein zweiter Tiefpassfilter am Eingang des Subtrahierers für eine wirksame Dämpfung des Störsignals sorgen.

Vorteilhafterweise ist dieser zweite Tiefpassfilter symmetrisch aufgebaut. Er umfasst zwei Reihenschaltungen aus jeweils zwei Widerständen, die dem Plus- und Minus-Eingang des Operationsverstärkers jeweils vorgeschaltet werden. Zwischen den Verbindungspunkten der Reihenschaltungen aus den beiden Widerständen ist eine Kapazität geschaltet.

Ein derart aufgebauter Tiefpassfilter kann auf besonders vorteilhafte Art und Weise die Störsignale eliminieren.

Dies gilt insbesondere dann, wenn alle vier Widerstände gleich groß sind.

Wird bei dem elektrischen Gerät darüber hinaus zur Glättung des gleichgerichteten Stroms nach dem Gleichrichter noch ein Glättungskondensator verwendet, kann dieser bei einem Vollweggleichrichter ebenfalls deutlich kleiner proportioniert werden, was eine weitere materielle Einsparung mit sich bringt.

Die Maßnahmen der auf den Anspruch 1 rückbezogenen Ansprüche können jeweils einzeln oder in jeder beliebigen Kombination mit der Antriebseinrichtung gemäß Patentanspruch 1 kombiniert werden.

In den Ansprüchen 1 bis 8 wird das elektrische Gerät ohne die Versorgungseinrichtung beansprucht. Der Anspruch 9 bezieht sich auf ein Antriebssystem, also auf eine Kombination einer Versorgungseinrichtung mit einem elektrischen Gerät bzw. einer Antriebseinrichtung.

Die Erfindung wird nachfolgend anhand einer Antriebseinrichtung näher erläutert.

Die Figur 1 zeigt ein Antriebssystem, bestehend aus einer Antriebseinrichtung und einer Versorgungseinrichtung.

Die Figur 2 zeigt ein zweites Ausführungsbeispiel des Antriebssystems.

Die Figur 3 zeigt Details einer Tiefpassschaltung gemäß Figur 2.

Die Figur 4 zeigt ein herkömmliches Antriebssystem.

In den Figuren bezeichnet SG einen Steuersignalgeber, AC eine Wechselspannungsquelle, E eine gemeinsame Erdleitung, D1 bis D4 Dioden, M einen Motor, SE eine Steuereinrichtung, AE eine Antriebseinrichtung, VE eine Versorgungseinrichtung, S einen Subtrahierer, G einen Gleichrichter, R1 bis R6 Widerstände, C einen Kondensator und TP1 sowie TP2 einen ersten sowie einen zweiten Tiefpass.

Die Antriebseinheit AE dient beispielsweise als Stellantrieb in der Gebäudetechnik. Aus dem Stand der Technik bekannt ist die auf die Anmelderin zurückgehende N05010 bzw. N10010. Diese Stellantriebe dienen zum Verstellen von Lüftungsklappen bzw. von Komponenten von Belüftungssystemen ganz allgemein.

Die Antriebseinrichtung AE wird über drei Leitungen mit der Versorgungseinrichtung VE verbunden, von denen einer eine gemeinsame Masse- oder Erdleitung darstellt. Die Versorgungseinrichtung kann gegebenenfalls noch weitere Antriebseinrichtungen versorgen. Sie umfasst einen Steuersignalgeber SG, der ein entsprechendes Steuersignal für die Antriebseinrichtung bereit stellt und eine Wechselspannungsquelle, die die notwendige Energie für die Antriebseinrichtung bereitstellt. Zwischen der Versorgungseinrichtung und der Antriebseinrichtung können entsprechend der Größe von Gebäuden mehrere 100 m liegen, so dass die Anschlussleitungen einen entsprechenden Widerstand aufweisen und gleichzeitig aus Kostengründen eine separate Erdleitung für den Steuersignalgeber und die Wechselspannungsquelle zu vermeiden ist.

Der von der Wechselspannungsquelle AC zugeführte Wechselstrom wird in der Antriebseinrichtung der Gleichrichterschaltung G zugeführt, die einen Brückengleichrichter umfasst, der durch die vier Dioden D1 bis D4 gebildet wird.

In der Zeichnung nicht dargestellt ist ein Kondensator, der dem Gleichrichter nachgeschaltet und dem Motor vorgeschaltet ist, um die gleichgerichtete Wechselspannung zu glätten. Der Motor wird nach Maßgabe der Steuereinrichtung SE betrieben. Diese empfängt ihre Steuerinformation von dem Steuersignalgeber SG der Versorgungseinrichtung.

An der Diode D4 tritt ein Spannungsabfall auf, so dass das Potential E2 hinter der Diode D4 nicht mehr dem Erdpotential entspricht. Da das Steuersignal ein Spannungssignal ist, das sich auf das gemeinsame Erdpotential bezieht, würde das Steuersignal verfälscht, wenn es sich auf das Potential nach der Gleichrichterschaltung beziehen würde. Zu diesem Zweck ist der Subtrahierer S vorgesehen, der von dem Steuersignal das Erdpotential abzieht, so dass nach dem Gleichrichter auftretende Potentialunterschiede das Steuersignal nicht verfälschen können.

Der Subtrahierer besteht aus einen Operationsverstärker OA und vier Widerständen R1, R2, R3 und R4. Um das Störsignal vollständig auszuregeln gelten für die Widerstände R1 bis R4: R3/R4 gleich R2/R1.

In dem beschriebenen Ausführungsbeispiel liefert die Wechselspannungsquelle AC eine Wechselspannung von 24 V. Das von dem Steuersignalgeber SG abgegebene Steuersignal liegt im Bereich von 0 bis 10 V. Als Dioden werden beispielsweise vier 1N4500 oder ein Brückengleichrichter MB6S verwendet. Als Glättungskondensator kommt ein Glättungskondensator von 100 µF in Betracht. Der Widerstand des Motors beträgt etwa 200 Ω.

Die Widerstände R1 und R4 betragen 10 kΩ. Die Widerstände R2 und R3 betragen 20 kΩ. Als Operationsverstärker OA kann der Operationsverstärker LM324 verwendet werden. Der Eingangswiderstand der Steuereinrichtung SE beträgt etwa 1 MΩ.

Die oben genannten Werte und Typen von Bauteilen können durch beliebige andere Bauteile ersetzt werden, die den selben Zweck erfüllen.

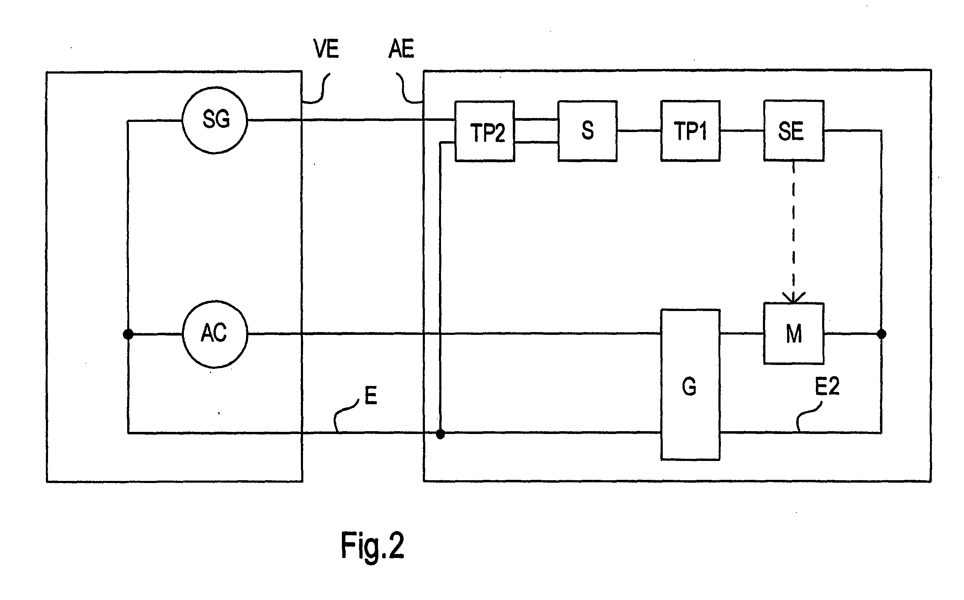

Bei dem in der Figur 2 gezeigten Ausführungsbeispiel ist der Subtrahierer S und der Gleichrichter G nur noch als Blockschaltbild dargestellt. Zusätzlich ist noch ein erster und/oder zweiter Tiefpass TP1 bzw. TP2 vorgesehen.

Der Tiefpass TP1 ist von herkömmlicher Bauart, d.h. er besteht beispielsweise aus einem Serienwiderstand von 10 kΩ und einem Parallelkondensator von 1µF. Durch die Verwendung dieses Tiefpassfilters können Störsignale ausgefiltert werden, die durch Ladestromimpulse entstehen. Diese sind dank der Vollweggleichrichtung nunmehr symmetrisch, so dass sie durch Tiefpassfilterung eliminiert werden, ohne die Höhe des Steuersignals zu verändern.

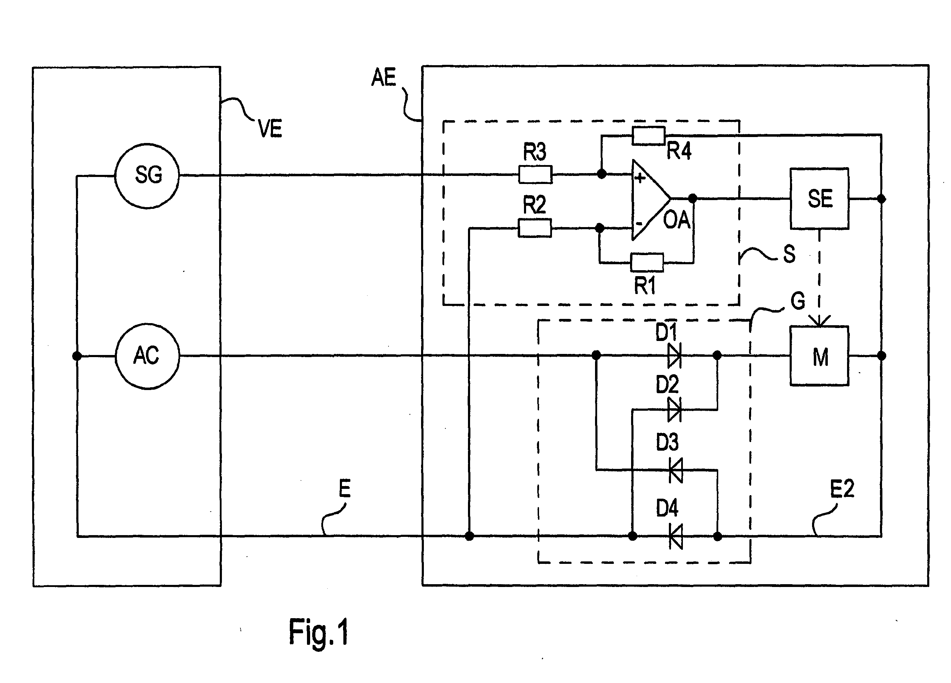

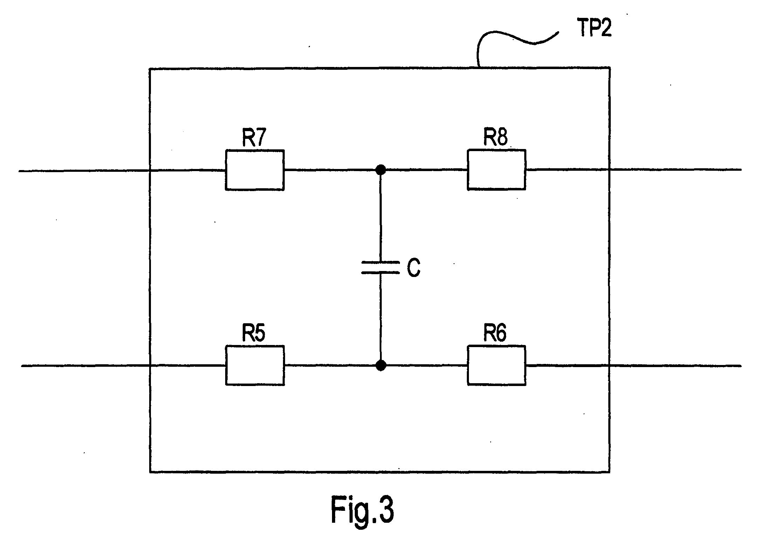

Der Tiefpassfilter TP2 weist den in der Figur 3 gezeigten Aufbau auf. Die Widerstände R5, R6, R7 und R8 betragen beispielsweise 10 kΩ, wohingegen der Kondensator C 1 µF hat. Bei Verwendung des Tiefpassfilters TP2 können die Widerstände R2 und R3 gemäß Figur 1 entfallen.

Der Widerstand der Leitung zwischen der Versorgungseinrichtung und der Antriebseinrichtung kann mehrere Ohm betragen. Gerade bei der Verwendung einer besonders langen Versorgungsleitung kann es passieren, dass der Tiefpassfilter TP1 nicht ausreicht, um die durch die Ladestromimpulse hervorgerufenen Störsignale zu eliminieren. Der Tiefpassfilter TP2 hat eine höhere Wirksamkeit als der Tiefpassfilter TP1.

Er kann anstatt des Tiefpassfilters TP1 oder in Kombination mit dem Tiefpassfilter TP1 verwendet werden.

Als alternative Lösungsmöglichkeiten bei Verwendung eines Vollweggleichrichters könnte an ein Schaltnetzteil mit galvanischer Entkopplung oder aber an die Übertragung der Steuersignale über Optokoppler gedacht werden. Diese beiden Lösungen umfassen aber einen wesentlich höheren materiellen Aufwand.

## Patentansprüche

1. Elektromotorische Antriebseinrichtung (**AE**) für ein gebäudetechnisches System, die über eine Anschlussleitung mit einer Versorgungseinrichtung einer zentralen Gebäudesteuerungseinrichtung verbunden ist, mit
(**a**) einem Vollwellengleichrichter (**G**), der von der Versorgungseinrichtung (**VE**) mit einem Wechselstrom versorgt wird,
(**b**) einem Motor (**M**), der von dem Vollwellengleichrichter mit Gleichstrom versorgt wird, und
(**c**) einer Steuereinrichtung (**SE**), die den Motor entsprechend einem von der Versorgungseinrichtung empfangenen Steuersignal steuert,
(**d**) wobei die Anschlussleitung eine gemeinsame Masseleitung (**E**) für den Wechselstrom und das Steuersignal von der Versorgungseinrichtung umfasst, und
(**e**) wobei ein Subtrahierer (**S**) vorgesehen ist, der die Differenz zwischen dem Steuersignal und dem Potential der Masseleitung an die Steuereinrichtung abgibt.

2. Elektromotorische Antriebseinrichtung nach Anspruch 1, **dadurch gekennzeichnet, dass** der Vollwellengleichrichter als Brückengleichrichter mit vier Dioden (**D1 bis D4**) ausgeführt ist.

3. Elektromotorische Antriebseinrichtung nach Anspruch 1, **dadurch gekennzeichnet, dass** der Subtrahierer einen Operationsverstärker (**OA**) und vier Widerstände (**R1 bis R4**) umfasst.

4. Elektromotorische Antriebseinrichtung nach Anspruch 1, **dadurch gekennzeichnet, dass** zwischen dem Subtrahierer und der Steuereinrichtung ein erster Tiefpassfilter (**TP1**) vorgesehen ist.

5. Elektromotorische Antriebseinrichtung nach Anspruch 1, **dadurch gekennzeichnet, dass** am Eingang des Subtrahierers ein zweiter Tiefpassfilter (**TP2**) vorgesehen ist.

6. Elektromotorische Antriebseinrichtung nach Anspruch 5, **dadurch gekennzeichnet, dass** der zweite Tiefpassfilter zwei Reihenschaltungen von jeweils zwei Widerständen (**R5 bis R8**) umfasst, die jeweils einem Eingang des Operationsverstärkers vorgeschaltet sind, wobei zwischen den Verbindungspunkten der beiden Widerstände der beiden Reihenschaltungen ein Kondensator (**C**) geschaltet ist.

7. Elektromotorische Antriebseinrichtung nach Anspruch 6, **dadurch gekennzeichnet, dass** die vier Widerstände des zweiten Tiefpassfilters gleich groß sind, oder dass R5=R7 und R6=R8 gilt.

8. Antriebssystem mit einer elektromotorischen Antriebseinrichtung nach einem der Ansprüche 1 bis 7 und einer Versorgungseinrichtung.

## Claims

1. Electric-motor drive device (**AE**) for a building technical system, which is connected via a connecting line to a supply device of a central building control device, having
(**a**) a full-wave rectifier (**G**) which is supplied with alternating current from the supply device (**VE**),
(**b**) a motor (**M**) which is supplied with direct current from the full-wave rectifier, and
(**c**) a control device (**SE**) which controls the motor in accordance with a control signal which is received from the supply device,
(**d**) wherein the connecting line comprises a common earth line (**E**) for the alternating current and the control signal from the supply device, and
(**e**) wherein a subtractor (**S**) is provided, which outputs the difference between the control signal and the potential of the earth line to the control device.

2. Electric-motor drive device according to Claim 1, **characterized in that** the full-wave rectifier is in the form of a bridge rectifier with four diodes (**D1 to D4**).

3. Electric-motor drive device according to Claim 1, **characterized in that** the subtractor comprises an operational amplifier (**OA**) and four resistors (**R1 to R4**).

4. Electric-motor drive device according to Claim 1, **characterized in that** a first low-pass filter (**TP1**) is provided between the subtractor and the control device.

5. Electric-motor drive device according to Claim 1, **characterized in that** a second low-pass filter (**TP2**) is provided at the input of the subtractor.

6. Electric-motor drive device according to Claim 5, **characterized in that** the second low-pass filter comprises two series circuits of two resistors (**R5 to R8**) each, which are each connected upstream of an input of the operational amplifier, wherein a capacitor (**C**) is connected between the connecting points of the two resistors of the two series circuits.

7. Electric-motor drive device according to Claim 6, **characterized in that** the four resistors in the second low-pass filter are of the same magnitude, or **in that** R5 = R7 and R6 = R8.

8. Drive system having an electric-motor drive device according to one of Claims 1 to 7 and a supply device.

## Revendications

1. Dispositif d'entraînement (AE) à moteur électrique pour un système technique d'immeuble qui est relié avec un dispositif d'alimentation d'un dispositif de commande d'immeuble central par le biais d'une ligne de raccordement, comprenant
(a) un redresseur à double alternance (G) qui est alimenté en courant alternatif par le dispositif d'alimentation (VE),
(b) un moteur (M) qui est alimenté en courant continu par le redresseur à double alternance, et
(c) un dispositif de commande (SE) qui commande le moteur en fonction d'un signal de commande reçu du dispositif d'alimentation,
(d) la ligne de raccordement comprenant une ligne de masse (E) commune pour le courant alternatif et le signal de commande du dispositif d'alimentation, et
(e) un soustracteur (S) étant prévu, lequel délivre au dispositif de commande la différence entre le signal de commande et le potentiel de la ligne de masse.

2. Dispositif d'entraînement à moteur électrique selon la revendication 1, **caractérisé en ce que** le redresseur à double alternance est réalisé sous la forme d'un redresseur en pont avec quatre diodes (D1 à D4).

3. Dispositif d'entraînement à moteur électrique selon la revendication 1, **caractérisé en ce que** le soustracteur comprend un amplificateur opérationnel (OA) et quatre résistances (R1 à R4).

4. Dispositif d'entraînement à moteur électrique selon la revendication 1, **caractérisé en ce qu'**un premier filtre passe-bas (TP1) est prévu entre le soustracteur et le dispositif de commande.

5. Dispositif d'entraînement à moteur électrique selon la revendication 1, **caractérisé en ce qu'**un deuxième filtre passe-bas (TP2) est prévu à l'entrée du soustracteur.

6. Dispositif d'entraînement à moteur électrique selon la revendication 5, **caractérisé en ce que** le deuxième filtre passe-bas comprend deux circuits série respectivement composés de deux résistances (R5 à R8) qui sont à chaque fois branchés en amont d'une entrée de l'amplificateur opérationnel, un condensateur (C) étant branché entre les points de connexion des deux résistances des deux circuits série.

7. Dispositif d'entraînement à moteur électrique selon la revendication 6, **caractérisé en ce que** les quatre résistances du deuxième filtre passe-bas ont la même valeur ou que R5 = R7 et R6 = R8.

8. Système d'entraînement muni d'un dispositif d'entraînement à moteur électrique selon l'une des revendications 1 à 7 et d'un dispositif d'alimentation.
